# EUROPÄISCHE PATENTSCHRIFT

(11) **EP 1 044 774 B1**
(45) Veröffentlichungstag und Bekanntmachung des Hinweises auf die Patenterteilung: **16.11.2005**
(21) Anmeldenummer: 00103578.1
(22) Anmeldetag: 19.02.2000
(51) Int. Cl.: B23D 45/16, B28D 1/18, B27B 9/02

(54) **Wandschlitzfräse**
Milling machine for grooving walls
Fraise pour rainurer des parois

(30) Priorität: 07.04.1999 DE 19915559
(43) Veröffentlichungstag der Anmeldung: 18.10.2000
(73) Patentinhaber: ITW Befestigungssysteme GmbH, 91522 Ansbach (DE)
(72) Erfinder: Biersack, Horst, 91623 Sachsen (DE); Hauer, Reinhard, 91629 Weihenzell (DE); Reinhold, Stefan, 90409 N-rnberg (DE)
(74) Vertreter: Blaumeier, Jörg

(56) Entgegenhaltungen:
- EP-A- 0 923 096
- DE-A- 3 408 966
- DE-A- 3 737 045
- DE-A- 19 511 721
- DE-U- 29 604 780
- GB-A- 927 584

## Beschreibung

Die Erfindung bezieht sich auf eine Wandschlitzfräse, bei der ein den Motor und die Frässcheiben tragender Fräskopf an einem Fahrgestell mit mehreren Laufrädern einseitig schwenkbar angelenkt und mit einem Längs- und einem Querhandgriff sowie mit einem Ein- und Ausschalter an einem der Handgriffe sowie mit einem Freigabeschalter für den Ein- und Ausschalter versehen ist
Eine solche Vorrichtung ist aus DE3737045A1 bekannt.
Wandschlitzfräsen sind in den unterschiedlichsten Ausführungsformen bekannt geworden. Im Allgemeinen verwenden sie zwei beabstandete, meist als Diamantscheiben ausgebildete, Frässcheiben, so dass beim Verfahren an einer Wand, Decke oder auch am Boden zwei parallele Schlitze erzeugt werden. Mit Hilfe eines Meißels kann der dazwischen stehende Steg sehr leicht herausgeschlagen werden, so dass die Ausbildung eines Wandschlitzes, vornehmlich zum Verlegen von Elektroleitungen oder auch Installationsrohren rasch und sauber möglich ist. Ein wesentliches Problem neben der guten Handhabbarkeit der Wandschlitzfräse mit Hilfe der beiden Handgriffe besteht dabei in der möglichst weitgehenden Ausschaltung aller Verletzungsgefahren gerade für den Benutzer selbst. Besonders groß sind dabei die Gefahren beim Beginn der Arbeiten, beim Ansetzen der Wandschlitzfräse an der Wand und beim Inbetriebnehmen des Motors. Die Wandschlitzfräse kann dabei durch unsymmetrische Belastung und durch ungleichmäßiges Andrücken seitlich ausbrechen und es besteht dann auch die Gefahr, dass bei einem Abrutschen einer Hand vom Handgriff die weiterlaufenden Frässcheiben den Benutzer selbst verletzen.

Aus der DE 37 37 045 C2 ist bereits eine Wandschlitzfräse bekannt geworden, die außer einem Ein- und Ausschalter auch noch einen Freigabeschalter besitzt. Dieser soll vor dem Ein- und Ausschalter kurz mit der rechten Hand gedrückt werden, wobei jedoch nichts darüber ausgesagt ist, wo der Schalter angeordnet ist, sodass insbesondere die Gefahr besteht, dass zwar einerseits erreicht wird, dass die zweite Hand außerhalb des Fräsbereichs angeordnet ist, da sie ja den Freigabeschalter betätigen muss, dass aber nach wie vor eine Einhandbedienung des Geräts stattfindet und das Gerät nicht von der Bedienungsperson an beiden Handgriffen gehalten wird.

Der Erfindung liegt daher die Aufgabe zugrunde, eine Wandschlitzfräse der eingangs genannten Art so auszugestalten, dass bei einfachster Bedienbarkeit die geschilderten Verletzungsgefahren möglichst ausgeschaltet sind.

Zur Lösung dieser Aufgabe ist erfindungsgemäß vorgesehen, dass der Freigabeschalter am jeweils anderen Handgriff zusammen mit einem Eintauchentriegelungsschalter für eine den Fräskopf gegen das Fahrgestell in einer verdeckten Stellung der Frässcheiben schwenkverriegelnden Schwenkarretiervorrichtung angeordnet ist, wobei der Eintauchentriegelungsschalter erst nach dem Freigabeschalter betätigbar ist.

Zum einen ist durch den Freigabeschalter am jeweils anderen Handgriff es unabdingbar, dass der Benutzer vor dem Einschalten des Motors für die Frässcheiben die Wandschlitzfräse an beiden Handgriffen hält, da er ja ansonsten den Freigabeschalter, der am einen Handgriff ist, und den Ein- und Ausschalter am anderen Handgriff nicht betätigen kann. Dies verhindert nicht nur ein versehentliches Einschalten sondern auch ein aus Bequemlichkeit bei längeren Arbeiten ansonsten häufig auftretendes leichtsinniges Einschalten der Wandschlitzfräse, wenn diese nur an einem Handgriff gehalten wird.

Von ganz besonderer Bedeutung ist darüber hinaus, die Schwenkarretiervorrichtung, die verhindert, dass die Frässcheiben nach unten aus dem Fahrgestell austreten können ehe diese Schwenkarretiervorrichtung wieder gelöst wird. Ohne Betätigung der Schwenkarretiervorrichtung bleiben die gegebenenfalls bereits rotierenden Frässcheiben in einer angehobenen Stellung verdeckt, so dass von ihnen keine Verletzungsgefahr ausgehen kann.

Einen besonderen Vorteil bietet die erfindungsgemäße Lösung dadurch, dass der Eintauchentriegelungsschalter erst nach dem Freigabeschalter betätigbar ist. Dies verhindert, dass irgendwann der Eintauchentriegelungsschalter betätigt wird und damit die Schwenkarretiervorrichtung praktisch völlig ausgeschaltet ist. Es wäre dann nämlich möglich, dass der Benutzer, ohne darauf zu achten oder ohne es zu wissen, dass die Schwenkarretiervorrichtung gar nicht mehr wirkt, das Gerät in Betrieb setzt und dann beim Heraustreten der Frässcheiben über die Unterseite des Fahrgestells es zu einem ungewünschten Arbeiten der Frässcheiben kommt. Es geht ja nicht nur ausschließlich darum, dass sich der Benutzer nicht selbst verletzt, sondern es geht auch darum, dass das Gerät nicht an einer falschen Stelle, wo es gar nicht arbeiten soll, beispielsweise solange es noch auf einen Tisch abgelegt ist, zu arbeiten beginnt.

Erst nach dem Betätigen des Freigabeschalters, um anschließend den Ein- und Ausschalter für den Motor betätigen zu können, kann der Eintauchentriegelungsschalter betätigt werden und dies steht in unmittelbarem Zusammenhang mit dem Beginn der Fräsarbeiten, so dass hier keine Verwechslungen und Irrtümer auftreten können.

Dabei liegt es im Rahmen der Erfindung, dass der Freigabeschalter und der Eintauchentriegelungsschalter in einem gemeinsamen Stufenschalter vereint sind. Durch die erste Betätigungsstufe wird der Freigabeschalter betätigt und beim Weiterdrücken der Eintauchentriegelungsschalter.

Um beim Arbeiten stets eine vorgebbare Frästiefe einhalten zu können, kann in weiterer Ausgestaltung der Erfindung ein die Schwenkbewegung des Fräskopfes gegenüber dem Fahrgestell begrenzender verstellbarer Eintauchanschlag vorgesehen sein, der in besonders einfacher Weise dadurch realisierbar ist, dass der verstellbare Eintauchanschlag eine mittels eines Drehknopfes verstellbare Exzenterscheibe am Fräskopf umfasst, die auf einem festen Gegenanschlag des Fahrgestells aufliegt.

Um auch beim Fräsen von Wandschlitzen im Bereich einer quer anstoßenden Wand möglichst bis in die Kante hinein fräsen zu können, kann gemäß einer weiteren Ausgestaltung der Erfindung vorgesehen sein, dass der Fräskopf an einem Stirnende am Fahrgestell angelenkt ist, und dass die Frässcheiben hinter der Fräskopf-Gehäusewand am anderen Stirnende angeordnet sind. Diese vorlaufende Anordnung der Frässcheiben an der Wandschlitzfräse garantiert darüber hinaus auch ein bequemes Arbeiten durch schräges Wegdrücken des Geräts vom Körper des Benutzers, was darüber hinaus auch aus Sicherheitsgründen vorteilhaft ist.

Da derartige Wandschlitzfräsen ja in Neubauten grundsätzlich vor dem Verputzen der Wände eingesetzt werden, so dass bei einem Mauerwerk die Fugen zwischen den einzelnen Mauersteinen noch mehr oder weniger vertieft freiliegen, ergeben sich immer wieder Probleme mit einem Verreißen des Geräts und mit sich ändernden Eintauchtiefen der Frässcheiben, wenn die Laufräder des Fahrgestells beim Verfahren in derartige Mörtelfugen eintauchen. Um diese Gefahr auszuschalten, kann gemäß einem weiteren Merkmal der vorliegenden Erfindung vorgesehen sein, dass das Fahrgestell wenigstens drei beabstandete, jeweils wenigstens ein Laufrad tragende Achsen aufweist. Durch dieses Vorsehen von mehr als zwei Laufachsen ist die Gefahr eines solchen Eintauchens der Laufräder unter gleichzeitiger Verkippung des Fahrgestells gegenüber der horizontalen Fahrebene ausgeschaltet, da in jedem Fall hier immer nur gerade eine Laufachse betroffen sein kann und in diesem Fall ja das Fahrgestell immer noch durch die Laufräder auf zwei weiteren Fahrachsen an einer solchen Eintauchverkippung gehindert ist.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

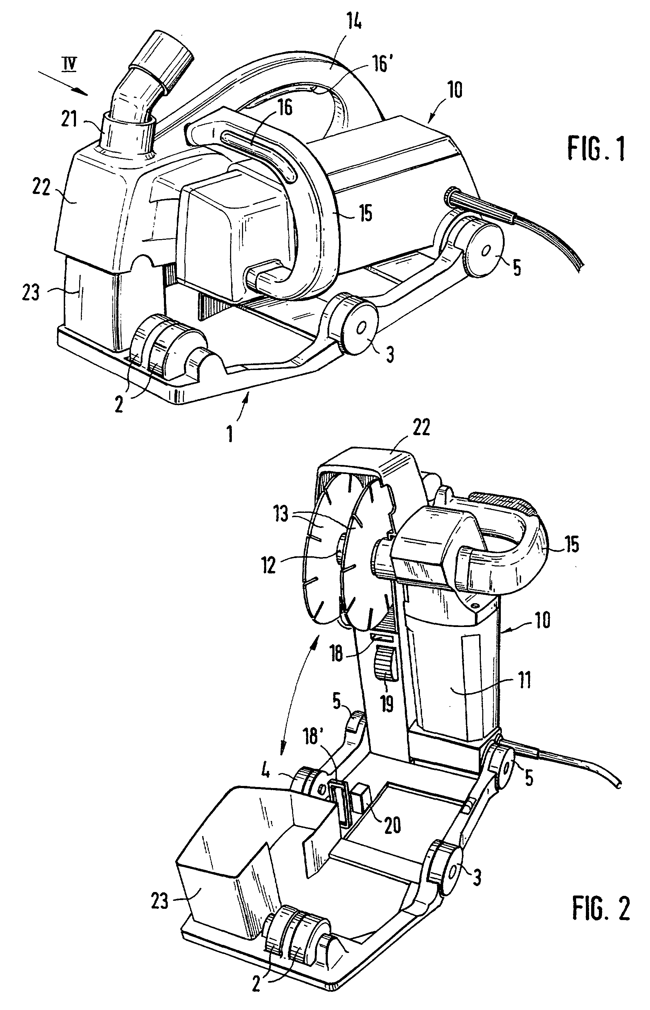

- Fig. 1: eine perspektivische Ansicht einer erfindungsgemäßen Wandschlitzfräse,
- Fig. 2: eine perspektivische Ansicht der Wandschlitzfräse bei nach oben hochgeschwenkten Fräskopf,
- Fig. 3: eine Aufsicht auf die Wandschlitzfräse nach den Fig. 1 und 2,
- Fig. 4: eine Seitenansicht der Wandschlitzfräse in Richtung des Pfeils IV in Fig. 1,

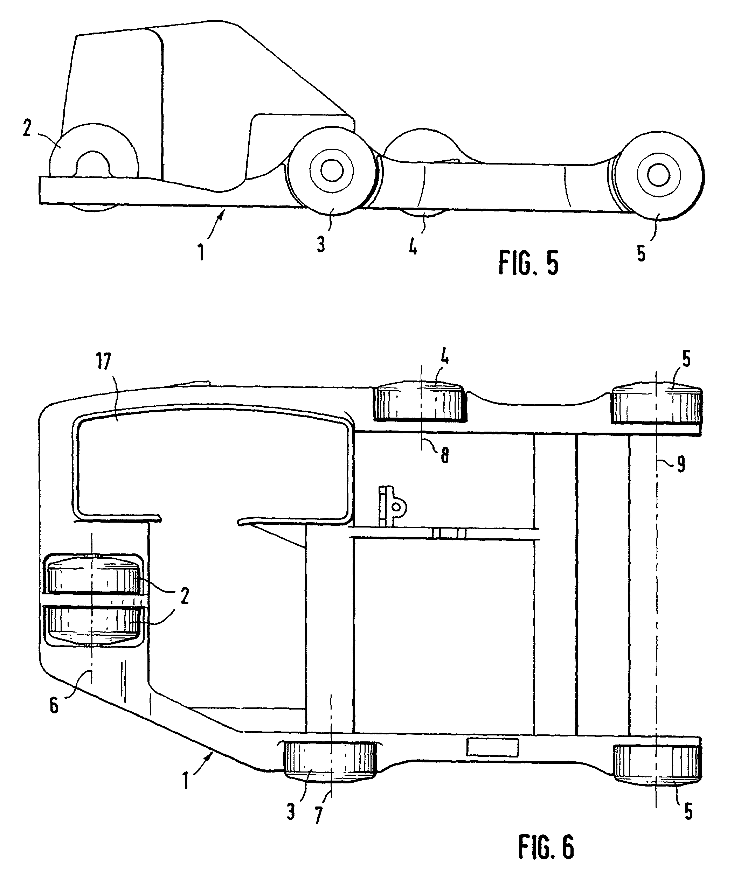

- Fig. 5: eine Seitenansicht, und
- Fig. 6: eine Aufsicht des Fahrgestells ohne den daran angelenkten Fräskopf.

Die dargestellte erfindungsgemäße Wandschlitzfräse besteht aus einem Fahrgestell 1 mit Laufrollen 2, 3, 4 und 5, die auf vier verschiedene Achsen 6 bis 9 verteilt angeordnet sind, sowie einem am hinteren Ende im Bereich der Laufrollen 5 schwenkbar am Fahrgestell 1 angelenkten Fräskopf 10.

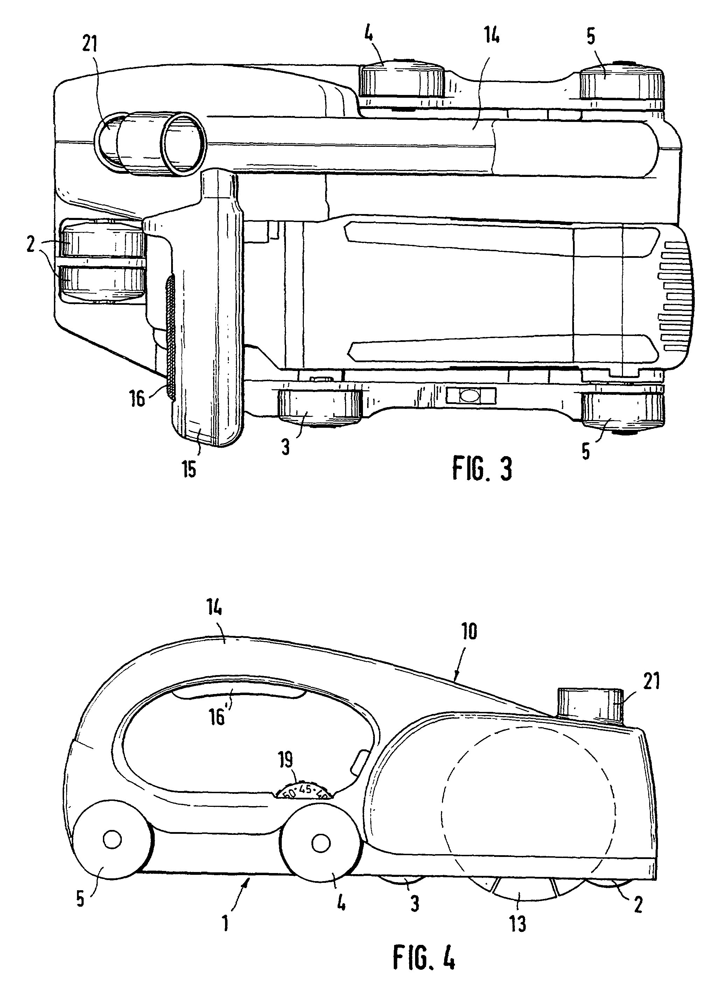

Der Fräskopf 10 umfasst einen gekapselt angeordneten Motor 11 zum Antreiben der Welle 12, auf der zwei Frässcheiben 13 in einem der gewünschten Wandschlitzbreite entsprechenden Abstand aufgespannt sind, sowie zwei Handgriffe 14 und 15. Der seitlich in Längsrichtung verlaufende Handgriff 14 trägt auf der Unterseite den Ein- und Ausschalter 16' zur Betätigung des Motors 11. An dem in einer um ca. 90° gegenüber der Ebene des Handgriffs 14 versetzt verlaufenden zweiten Handgriff 15 - der Winkel von 90° ist natürlich nicht zwingend - ist ein als Stufenschalter ausgebildeter Schalter 16 angeordnet, der in der ersten Stufe als Freigabeschalter zum Freigeben des Ein- und Ausschalters 16' und in der zweiten Stufe als Eintauchentriegelungsschalter für eine nicht gezeigte, hinter dem Schlitz 18 liegende, mit der Verriegelungszunge 18' zusammenwirkende, Schwenkarretiervorrichtung ausgebildet ist, die verhindert, dass die Frässcheiben nach unten aus der Öffnung 17 des Fahrgestells 1 in die in Fig. 4 gezeigte Arbeitsstellung austreten können. Solange der Eintauchentriegelungsschalter nicht gedrückt ist, liegen die Frässcheiben 13 oberhalb der Bodenebene des Fahrgestells 1, so dass selbst bei laufendem Motor weder die Gefahr einer Verletzung des Benutzers noch die Gefahr von Beschädigungen an einer Auflage besteht, auf der die Wandschlitzfräse zunächst vor dem Einsatz abgestellt ist, unabhängig davon, ob bereits das Gerät in Betrieb genommen worden ist.

Bei 19 erkennt man ein spiralförmiges Nockenrad, das auf einem turmartigen Gegenanschlag 20 am Fahrgestell aufliegt. Durch das Verdrehen des Nockenrades 19 läßt sich die Eintauchtiefe der Frässcheiben einstellen. Die Anlenkung des Fräskopfes 10 am Fahrgestell 1 erfolgt bevorzugt um eine Achse, die mit der Achse 9 der hinteren Laufräder 5 übereinstimmt, während die Frässcheiben möglichst weit am anderen Ende angeordnet sind. Dadurch kann man mit der erfindungsgemäßen Wandschlitzfräse sehr nahe bis in den Bereich einer Kante zwischen zwei Wänden arbeiten.

Bei 21 erkennt man einen Anschlußstutzen zum Ansetzen eines Absaugschlauches, um den beim Arbeiten entstehenden Frässtaub sauber absaugen zu können. Zu diesem Zweck befinden sich die Frässcheiben 13 innerhalb einer Haube 22, die ihrerseits eine Gegenhaube 23 am Fahrgestell übergreift und so ein Saugraum zu bilden, aus dem der entstehende Frässtaub über den Anschlußstutzen 21 abgesaugt werden kann.

## Patentansprüche

1. Wandschlitzfräse, bei der ein den Motor (11) und die Frässcheiben (13) tragender Fräskopf (10) an einem Fahrgestell (1) mit mehreren Laufrädern einseitig schwenkbar angelenkt und mit einem Längs- und einem Querhandgriff (15) sowie mit einem Ein- und Ausschalter an einem der Handgriffe sowie mit einem Freigabeschalter für den Ein- und Ausschalter (16') versehen ist, **dadurch gekennzeichnet, dass** der Freigabeschalter am jeweils anderen Handgriff (15) zusammen mit einem Eintauchentriegelungsschalter für eine den Fräskopf (10) gegen das Fahrgestell (1) in einer verdeckten Stellung der Frässcheiben (13) schwenkverriegelnden Schwenkarretiervorrichtung angeordnet ist, wobei der Eintauchentriegelungsschalter erst nach dem Freigabeschalter betätigbar ist.

2. Wandschlitzfräse nach Anspruch 1, **dadurch gekennzeichnet, dass** der Freigabeschalter und der Eintauchentriegelungsschalter in einem gemeinsamen Stufenschalter (16) vereint sind.

3. Wandschlitzfräse nach Anspruch 1 oder 2, **gekennzeichnet durch** einen, die Schwenkbewegung des Fräskopfes (10) gegenüber den Fahrgestell (1) zur Einstellung der Frästiefe begrenzenden, verstellbaren Eintauchanschlag.

4. Wandschlitzfräse nach Anspruch 3, **dadurch gekennzeichnet, dass** der verstellbare Eintauchanschlag ein verstellbares Nockenrad (19) am Fräskopf umfasst, das auf einem festen Gegenanschlag (20) des Fahrgestells (1) aufliegt.

5. Wandschlitzfräse nach einem der Ansprüche 1 bis 4, **dadurch gekennzeichnet, dass** der Fräskopf (10) an einem Stirnende am Fahrgestell (1) angelenkt ist und dass die Frässcheiben 9 teilweise verdeckt in einer Gehäusehaube (22) am anderen Stirnende angeordnet sind.

6. Wandschlitzfräse nach einem der Ansprüche 1 bis 5, **dadurch gekennzeichnet, dass** das Fahrgestell wenigstens drei beabstandete, jeweils wenigstens ein Laufrad (2, 3, 4, 5) tragende Achsen (6, 7, 8, 9) aufweist.

## Claims

1. Milling machine for grooving walls, wherein a milling head (10) carrying the motor (11) and the milling wheels (13) is coupled pivotably on one side to a bogey (1) with plural running wheels, being provided with a longitudinal and a transverse handle (15) and an on/off switch on one of the handles, and having a release switch for the on/off switch (16'), **characterised in that** the release switch is disposed on the respectively other handle (15) together with an immersion unlocking switch for a pivot locking device pivotably locking the milling head (10) against the bogey (1) in a covered position of the milling wheels (13), wherein the immersion unlocking switch is only actuatable after the release switch.

2. Milling machine for grooving walls according to claim 1, **characterised in that** the release switch and the immersion unlocking switch are combined in a common step switch (16).

3. Milling machine for grooving walls according to claim 1 or 2, **characterised by** an adjustable immersion stop defining the pivotal movement of the milling head (10) relative to the bogey (1) in order to set the milling depth.

4. Milling machine for grooving walls according to claim 3, **characterised in that** the adjustable immersion stop comprises an adjustable cam wheel (19) on the milling head, which cam wheel rests on a fixed counter-stop (20) of the bogey (1).

5. Milling machine for grooving walls according to one of claims 1 to 4, **characterised in that** the milling head (10) is coupled to an end face of the bogey (1) and **in that** the milling wheels (9) are arranged partially covered in a housing hood (22) at the other end face.

6. Milling machine for grooving walls according to one of claims 1 to 5, **characterised in that** the bogey has at least three spaced axes (6, 7, 8, 9) each carrying a running wheel (2, 3, 4, 5).

## Revendications

1. Fraise pour rainurer des parois, dans laquelle une tête de fraisage (10) portant le moteur (11) et les disques de fraisage (13) est articulée d'un côté de manière pivotante sur un chariot (1) avec plusieurs roues et est équipée d'une poignée longitudinale et d'une poignée transversale (15) ainsi que d'un commutateur de mise en circuit et d'un commutateur de mise hors circuit sur l'une des poignées ainsi que d'un commutateur de desserrage pour le commutateur de mise en circuit et le commutateur de mise hors circuit (16'), **caractérisée en ce que** le commutateur de desserrage est placé sur l'autre poignée (15), conjointement avec un commutateur de déverrouillage de plongée pour un dispositif de blocage du pivotement verrouillant le pivotement de la tête de fraisage (10) contre le chariot (1) dans une position recouverte des disques de fraisage (13), le commutateur de déverrouillage de plongée pouvant être actionné seulement après le commutateur de desserrage.

2. Fraise pour rainurer des parois selon la revendication 1, **caractérisée en ce que** le commutateur de desserrage et le commutateur de déverrouillage de plongée sont réunis dans un commutateur de réglage en charge commun (16).

3. Fraise pour rainurer des parois selon la revendication 1 ou 2, **caractérisée par** une butée de plongée réglable limitant le pivotement de la tête de fraisage (10) par rapport au chariot (1) pour le réglage de la profondeur de fraisage.

4. Fraise pour rainurer des parois selon la revendication 3, **caractérisée en ce que** la butée de plongée réglable comprend une roue à cames réglable (19) sur la tête de fraisage qui est appuyée sur une contre-butée fixe (20) du chariot (1).

5. Fraise pour rainurer des parois selon l'une quelconque des revendications 1 à 4, **caractérisée en ce que** la tête de fraisage (10) est articulée à une extrémité frontale sur le chariot (1) et **en ce que** les disques de fraisage 9 sont placés, partiellement recouverts, dans un capot de carter (22) à l'autre extrémité frontale.

6. Fraise pour rainurer des parois selon l'une quelconque des revendications 1 à 5, **caractérisée en ce que** le chariot (1) comporte au moins trois axes (6, 7, 8, 9) placés à distance les uns des autres, portant chacun au moins une roue (2, 3, 4, 5).
